# EUROPEAN PATENT SPECIFICATION

(11) **EP 0 581 483 B1**
(45) Date of publication and mention of the grant of the patent: **18.06.1997**
(21) Application number: 93305485.0
(22) Date of filing: 13.07.1993
(51) Int. Cl.: B21K 1/30

(54) **Device for and method of forging a helical gear**
Vorrichtung und Verfahren zum Schmieden eines schrägverzahnten Zahnrades
Dispositif et procédé pour le forgeage d'une roue dentée à denture hélicoidale

(30) Priority: 14.07.1992 JP 210947/92
(43) Date of publication of application: 02.02.1994
(73) Proprietor: O-OKA FORGE CO., LTD., Nagoya-shi, Aichi-pref. (JP)
(72) Inventor: Hoguchi, Tetsuya, Toyota-shi, Aichi-pref. (JP)
(74) Representative: Greenwood, John David

(56) References cited:
- FR-A- 2 275 261
- FR-A- 2 626 643
- US-A- 2 674 924
- PATENT ABSTRACTS OF JAPAN vol. 2, no. 31 7 August 1963 & JP-A-38 014 014 (SHIMANO) 3 August 1963

## Description

The present invention relates to a device for forging a helical gear and also to a novel method of forging the same.

In a conventional plastics working process for forging a helical gear, a forged work is guided and rotated by a plurality of helical-tooth forging elements formed on a fixed die to be taken out of the die. In an alternative process, a die is rotated for removal of a fixed work.

In the former method, the tooth profile of the helical teeth may be damaged on the removal of the work. In the latter method, on the other hand, a rotational mechanism of the die may not appreciably absorb an excessive stress. Moreover, a small clearance naturally formed in the rotational mechanism decreases the accuracy of the die.

One object of the invention is thus to provide an improved device for forging a helical gear.

Another object of the invention is to provide a forging device which allows a helical geared work to be taken out of a die without any damage.

A further object of the invention is to provide an improved method of forging a helical gear and removing the same from a die.

The above and other related objects are realized by a device and method for forging a helical gear and removing the forged helical gear from a die according to the claims. FR-A-2,275,261 discloses:
a die having a cavity of a predetermined shape and a plurality of helical-tooth forging elements formed on an inner circumferential face of said cavity for forming a plurality of helical teeth on a side wall of a work,
an ejector guide integrally formed with or securely fixed to said die,
an ejector supported by said ejector guide to be rotatable around a central axis of said ejector and movable along said central axis between a first position where said ejector is located below said cavity of said die and a second position where said ejector is protruded through a center of said cavity, and
joint means formed on said ejector for securely joining said work with said ejector to allow an integral movement and rotation of said work with said ejector,
wherein said ejector has first guiding means and said ejector guide has second guiding means corresponding to and engaging with said first guiding means, whereby said ejector being movably and rotatably fitted in said ejector guide through an engagement of said first guiding means with said second guiding means.

The present invention is characterised in that said first guiding means has a plurality of first guiding helical teeth, and said second guiding means has a plurality of second guiding helical teeth mating with said plurality of first guiding helical teeth.

One of the first guiding element and the second guiding element may be formed as a male-type screw member while the other of the first guiding element and the second guiding element is constituted as a female-type screw member. The ejector is thus rotatably and movably fitted in the ejector guide through an engagement of the first guiding element with the second guiding element.

When the knock-out pin is pressed upward along the central axis, the ejector is rotated and moved upward simultaneously through an engagement of the first guiding element and the second guiding element. The press-up movement of the knock-out pin also moves up and rotates the work, which is securely joined with the ejector via the joint element and has the plurality of helical teeth formed thereon. The work moves upward and rotates synchronously with movement and rotation of the ejector wherein the helical teeth formed on the work engage with the helical-tooth forging elements disposed on the cavity of the die.

The ratio of a rotational angle to a moving distance along the central axis in the work is identical with the same in the ejector. When the knock-out pin is pressed upward, the ejector moves along the central axis from the first position to the second position by a predetermined distance and simultaneously rotates by a predetermined angle. Meanwhile, the work with the plurality of helical teeth moves along the central axis by the same distance and rotates by the same angle. This makes the helical teeth on the work free from an excessive force and allows smooth removal of the work from the cavity of the die.

A known method, of FR-A-2,275,261, provides a method of forging a helical gear and removing the forged helical gear from a die which includes the steps of:
A. setting a work into a cavity of a die and on an ejector via a joint element for securely joining the work with the ejector,
   the cavity having a predetermined shape, the die having a plurality of helical-tooth forging elements formed on an inner circumference of the cavity for forming a plurality of helical teeth on a side wall of the work, the ejector being supported by an ejector guide securely fixed to or integrally formed with the die to be rotatable around a central axis of the ejector and movable the central axis between a first position where the ejector is located below the cavity of the die and a second position where the ejector is protruded through a center of the cavity,
   wherein the ejector has a first guiding element and the ejector guide has a second guiding element corresponding to and engaging with the first guiding element, whereby the ejector being movably and rotatably fitted in the ejector guide through an engagement of the first guiding element with the second guiding element,
B. descending and pressing down a punch onto the work to form the plurality of helical teeth on the side wall of the work,
C. lifting up the punch and moving the ejector along the central axis from the first position to the second position simultaneously with a rotation relative to the ejector guide, and
D. removing the work from the cavity of the die wherein the work being securely joined with the ejector via the joint element and moved out of the die upon a movement of the ejector to the second position.

The method of this present invention is characterized in that in said step A:
said first guiding means has a plurality of first guiding helical teeth, and said second guiding means has a plurality of second guiding helical teeth mating with said plurality of first guiding helical teeth.

One of the first guiding element of the ejector and the second guiding element of the ejector guide may be formed as a male-type screw member while the other of the first guiding element and the second guiding element is constituted as a female-type screw member, thus allowing a screw-type movement of the ejector, that is, simultaneous movement along and rotation around the central axis.

The screw-type movement of the ejector synchronously moves up and rotates the work wherein the helical teeth formed on the work engage with the helical-tooth forging elements disposed on the cavity of the die. The ratio of a rotational angle to a moving distance along the central axis in the work is identical with the same in the ejector. While the ejector moves along the central axis from the first position to the second position by a predetermined distance and simultaneously rotates by a predetermined angle. The work with the plurality of helical teeth moves along the central axis by the same distance and rotates by the same angle. This makes the helical teeth on the work free from an excessive external pressure and allows smooth removal of the work from the cavity of the die.

These and other objects, features, aspects, and advantages of the present invention will become more apparent from the following detailed description of the exemplary preferred embodiment with reference to the accompanying drawings of which
Fig. 1 is a cross sectional view showing a first step of forging a helical gear with a helical gear-forging device according to the invention;
Fig. 2 is a cross sectional view showing a second step of forging the helical gear; and
Fig. 3 is a cross sectional view showing a third step of forging the helical gear.

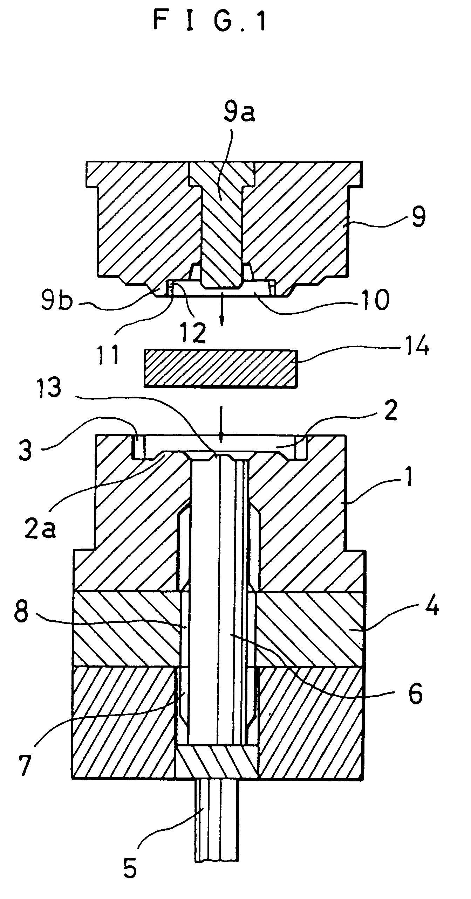

A device for and a method of forging a helical gear according to the invention are described in detail based on the drawings. Figs. 1 through 3 show a process of forging a helical gear with a helical gear-forging device of the invention.

A die 1 includes a cavity 2 formed on a top face thereof and having a predetermined shape corresponding to a helical gear portion of a final product. The cavity 2 has a first ring projection 2a on a bottom face thereof. The die 1 further includes a plurality of helical-tooth forging elements 3 formed on an inner circumferential face of the cavity 2 for forming helical teeth on a side wall of a work 14. An ejector guide 4 for supporting an ejector 6 penetrating a center of the cavity 2 is fixed to and disposed below the die 1. The ejector 6 has a joint projection 13 of a polygonal shape on a top end face thereof.

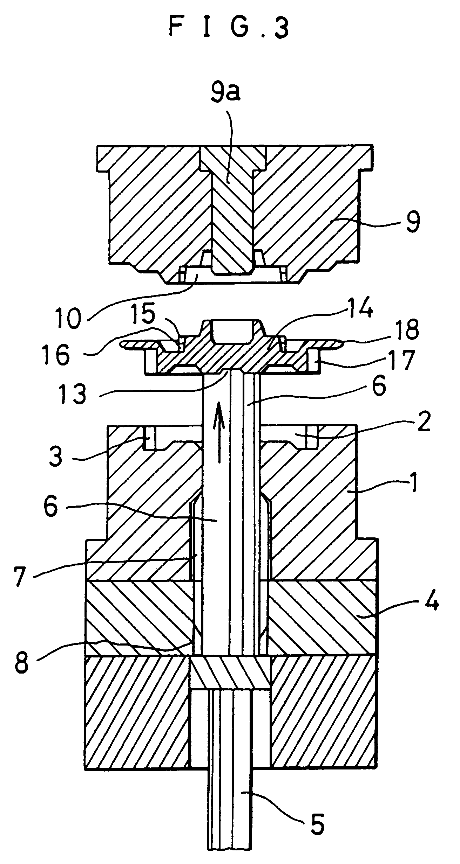

The ejector 6 supported by the ejector guide 4 is movable along a vertical axis thereof between a first position and a second position corresponding to a vertical movement of a knock-out pin 5. The ejector 6 is located below the cavity 2 of the die 1 at the first position shown in Fig. 1 and is protruded through the center of the cavity 2 upon a press-up movement of the knock-out pin 5 at the second position shown in Fig. 3.

The ejector 6 has a plurality of (preferably three or more) first guiding helical teeth 7 while the ejector guide 4 has a plurality of (preferably three or more) second guiding helical teeth 8 corresponding to and engaging with the first guiding helical teeth 7. The movable ejector 6 is thus fitted in and supported by the fixed ejector guide 4 through engagement of the first guiding helical teeth 7 with the second guiding helical teeth 8. For example, the first guiding helical teeth 7 are formed as a male-type screw member and the second guiding helical teeth 8 are as a female-type screw member. Alternatively, the first guiding helical teeth 7 and the second guiding helical teeth 8 may be formed as a female-type screw and a male-type screw, respectively.

When the knock-out pin 5 is pressed upward along the vertical axis, the ejector 6 is rotated and moved upward simultaneously through the screw type engagement of the first guiding helical teeth 7 and the second guiding helical teeth 8. The press-up movement of the knock-out pin 5 also rotates and moves up the work 14 having a plurality of helical teeth 17 formed thereon by the plurality of helical-tooth forging elements 3 on the cavity 2 of the die 1. The work 14 moves upward and rotates synchronously with movement and rotation of the ejector 6 wherein the helical teeth 17 formed on the work 14 engage with the helical-tooth forging elements 3 disposed on the cavity 2 of the die 1.

The ratio of a rotational angle to a moving distance along the vertical axis in the work 14 is identical with the same in the ejector 6. When the knock-out pin 5 is pressed upward, the ejector 6 moves along the vertical axis from the first position to the second position by a predetermined distance and simultaneously rotates by a predetermined angle. Meanwhile, the work 14 with the plurality of helical teeth 17 moves along the vertical axis by the same distance and rotates by the same angle. This allows smooth removal of the work 14 from the cavity 2 of the die 1.

A punch 9 disposed above and coaxially with the cavity 2 of the die 1 has a two-stepped recess 10 consisting of a larger-diametral step and a smaller-diametral step as shown in Fig. 1. The larger-diametral step is provided with a plurality of straight-tooth forging elements 11 on the circumference thereof for forming a dog gear on the work 14. Each of the straight-tooth forging elements 11 has a chamfering portion 12. The punch 9 also has an inner punch 9a which is fitted in a center of the punch 9 and protruded into the two-stepped recess 10. The punch 9 is further provided with a second ring projection 9b on a bottom face thereof.

A process of forging a helical gear with the device thus constructed is described hereinafter.

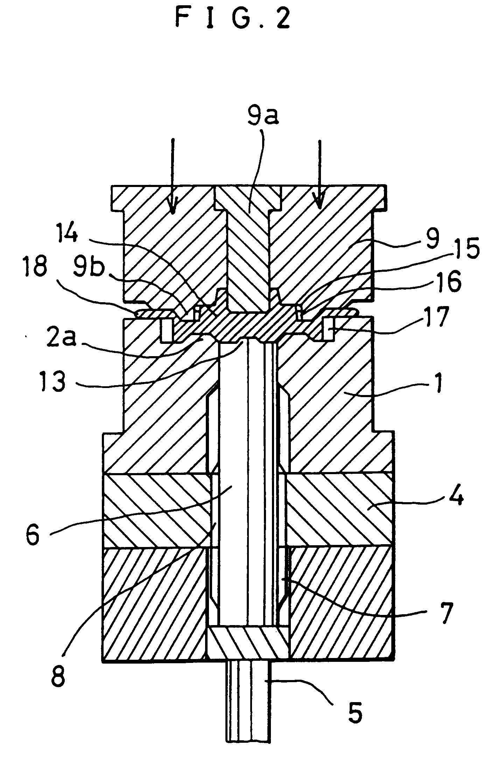

After the work 14 is set in the cavity 2 of the die 1, the punch 9 is descended and pressed down onto the work 14 as shown by the arrow of Fig. 1. A certain pressure applied onto the work 14 via the punch 9, in cooperation with the inner punch 9a and the first and the second ring projections 2a and 9b protruded into the work 14, allows a plurality of straight teeth 16 with guide chamfers 15 and a plurality of helical teeth 17 to be formed on the circumference of the work 14 as shown in Fig. 2. An excessive portion of the work 14 radially runs to a clearance between the die 1 and the punch 9 to form a fin 18.

The knock-out pin 5 is then pressed upward along the vertical axis while the punch 9 is lifted up as shown in Fig. 3. A press-up movement of the knock-out pin 5 rotates and simultaneously moves up the ejector 6 as described above. The work 14 rotates and moves up together with the ejector 6 to be separated and removed from the cavity 2 of the die 1. The work 14 is securely coupled and joined with the ejector 6 via the polygonal joint projection 13 formed on the top end face of the ejector 6.

The screw-type movement of the ejector 6 corresponds to a screw-type movement of the helical teeth 17 on the work 14 with respect to the helical-tooth forging elements 3 as described above. This makes the helical teeth 17 on the work 14 free from any excessive pressure during removal of the work 14 from the cavity 2. The helical teeth 17 formed in the above manner have a sufficient accuracy and precision.

In a subsequent post-working process, the fin 18 is removed from the work 14, a through hole for a shaft is formed on the center of the work 14, and the guide chamfers 15 of the straight teeth 16 are inversely tapered.

There may be many modifications, alternations, and changes without departing from the scope of the appended claims, and thereby it is clearly understood that the above embodiment is only illustrative and not restrictive in any sense.

For example, the straight-tooth forging elements 11 of the punch 9 may be omitted according to the requirement. The polygonal joint projection 13 used as the joint element may be replaced by an eccentrically projected pin or an eccentrically formed recess. The first and the second ring projections 2a and 9b arranged for making a final product thin and light in weight may also be omitted according to the requirement.

## Claims

1. A device for forging a helical gear and removing said forged helical gear from a die (1), said device comprising
a die (1) having a cavity (2) of a predetermined shape and a plurality of helical-tooth forging elements (3) formed on an inner circumferential face of said cavity for forming a plurality of helical teeth on a side wall of a work (14),
an ejector guide (4) integrally formed with or securely fixed to said die (1),
an ejector (6) supported by said ejector guide (4) to be rotatable around a central axis of said ejector (6) and movable along said central axis between a first position where said ejector (6) is located below said cavity of said die (1) and a second position where said ejector (6) is protruded through a center of said cavity (2), and
joint means formed on said ejector (6) for securely joining said work with said ejector (6) to allow an integral movement and rotation of said work with said ejector (6),
wherein said ejector (6) has first guiding means and said ejector guide (4) has second guiding means corresponding to and engaging with said first guiding means, whereby said ejector (6) being movably and rotatably fitted in said ejector guide (4) through an engagement of said first guiding means with said second guiding means, characterized in that:
said first guiding means has a plurality of first guiding helical teeth (7), and said second guiding means has a plurality of second guiding helical teeth (8) mating with said plurality of first guiding helical teeth (7).

2. A device in accordance with claim 1, wherein one of said first guiding means and said second guiding means is formed as a male-type screw element while the other of said first guiding means and said second guiding means is formed as a female-type screw element; and, optionally
I) wherein a rotation
and vertical movement of said ejector (6) through an engagement of said male-type screw element with said female-type screw element synchronously rotates and moves said work (14) securely joined with said ejector (6) by said joint means, said work (14) moving and rotating through an engagement of said plurality of helical teeth formed on the side wall of said work with said plurality of helical-tooth forging elements disposed on said cavity of said die (1); in which case, further optionally,
II) wherein said
ejector (6) rotates by a first angle simultaneously with moving along said central axis by a first distance while said work (14) rotates by a second angle simultaneously with moving along said central axis by a second distance, a first ratio of said first angle to said first distance is identical with a second ratio of said second angle to said second distance; in which case either
III) said first angle may be equal to said second angle, or
IV) said device
further comprising a knock-out pin (5) movable along said central axis for moving said ejector (6) between said first position and said second position, and a punch (9) for pressing said work to form said plurality of helical teeth on the side wall of said work (14), in which latter case, optionally, either
V) said punch (9)
has a smaller-diametral first recess and a larger-diametral second recess arranged coaxially with and adjacent to said smaller-diametral first recess, said larger-diametral second recess having a plurality of straight-tooth forging elements for forming a plurality of straight teeth coaxially with said plurality of helical teeth on the side wall of said work; or
VI) wherein said
cavity (2) of said die (1) has a first ring projection (2a) for forming a first ring groove on one side of said work, and said punch (9) has a second ring projection (9b) for forming a second ring groove on the other side of said work (14).

3. A method of forging a helical gear and removing said forged helical gear from a die (1), said method comprising the steps of
A. setting a work into a cavity (2) of a die (1) and on an ejector (6) via joint means for securely joining said work (14) with said ejector (6),
said cavity (2) having a predetermined shape, said die (1) having a plurality of helical-tooth forging elements formed on an inner circumference of said cavity for forming a plurality of helical teeth on a side wall of said work (14), said ejector (6) being supported by an ejector guide (4) securely fixed to or integrally formed with said die (1) to be rotatable around a central axis of said ejector (6) and movable said central axis between a first position where said ejector (6) is located below said cavity (2) of said die (1) and a second position where said ejector (6) is protruded through a center of said cavity (2),
wherein said ejector (6) has first guiding means and said ejector guide has second guiding means corresponding to and engaging with said first guiding means, whereby said ejector (6) being movably and rotatably fitted in said ejector guide (4) through an engagement of said first guiding means with said second guiding means,
B. descending and pressing down a punch (9) onto said work (14) to form said plurality of helical teeth on the side wall of said work,
C. lifting up said punch (9) and moving said ejector (6) along said central axis from said first position to said second position simultaneously with a rotation thereof relative to said ejector guide (4), and
D. removing said work from said cavity (2) of said die (1) wherein said work (14) being securely joined with said ejector (6) via said joint means and moved out of said die (1) upon a movement of said ejector (6) to said second position, characterized in that:
in said step A, said first guiding means has a plurality of first guiding helical teeth (7), and said second guiding means has a plurality of second guiding helical teeth (8) mating with said plurality of first guiding helical teeth (7).

4. A method in accordance with claim 3, wherein in said step A, one of said first guiding means and said second guiding means is formed as a male-type screw element while the other of said first guiding means and said second guiding means is formed as a female-type screw element.

5. A method in accordance with claim 4, wherein in said step C, a rotation and vertical movement of said ejector (6) through an engagement of said male-type screw element with said female-type screw element synchronously rotates and moves said work (14) securely joined with said ejector (6) by said joint means, said work moving and rotating through an engagement of said plurality of helical teeth formed on the side wall of said work with said plurality of helical-tooth forging elements disposed on said cavity of said die (1).

6. A method in accordance with claim 5, wherein in said step C, said ejector (6) rotates by a first angle simultaneously with moving along said central axis by a first distance while said work (14) rotates by a second angle simultaneously with moving along said central axis by a second distance, a first ratio of said first angle to said first distance is identical with a second ratio of said second angle to said second distance.

7. A method in accordance with claim 6, wherein said first angle is equal to said second angle.

## Patentansprüche

1. Eine Vorrichtung zum Gesenkschmieden oder -pressen eines schrägverzahnten Zahnrades und Entfernen dieses geschmiedeten oder formgepressten schrägverzahnten Zahnrades von einer Form (1), wobei die Vorrichtung folgendes umfaßt:
eine Form (1) mit einem Hohlraum (2) mit einer vorgegebenen Gestalt und einer Vielzahl von Schrägzahnformungselementen (3), die auf einer inneren Umfangsfläche des Hohlraums ausgebildet sind, zum Ausbilden einer Vielzahl von Schrägverzahnungszähnen auf einer Seitenwand eines Werkstücks (14),
eine Auswerferführung (4), die einstückig mit der Form (1) ausgebildet ist oder fest an dieser befestigt ist,
einen Auswerfer (6), der von der Auswerferführung (4) so gehaltert wird, daß er um eine Mittelachse des Auswerfers (6) drehbar und entlang dieser Mittelachse zwischen einer ersten Position, bei der der Auswerfer (6) unterhalb des Hohlraums der Form (1) gelegen ist, und einer zweiten Position, bei der der Auswerfer (6) durch ein Mittelteil des Hohlraums (2) vorragt, bewegbar ist, und
Verbindungseinrichtungen, die auf dem Auswerfer (6) ausgeformt sind, zum sicheren Verbinden des Werkstücks mit dem Auswerfer (6), um eine integrale Bewegung und Drehung des Werkstücks mit dem Auswerfer (6) zu gestatten, wobei der Auswerfer (6) eine erste Führungseinrichtung aufweist und die Auswerferführung (4) eine zweite Führungseinrichtung aufweist, die der ersten Führungseinrichtung entspricht und mit ihr zum Eingriff kommt,
wodurch der Auswerfer (6) bewegbar und drehbar durch einen Eingriff der ersten Führungseinrichtung mit der zweiten Führungseinrichtung in die Auswerferführung (4) eingepaßt ist, dadurch gekennzeichnet, daß:
die erste Führungseinrichtung eine Vielzahl erster führender Schrägverzahnungszähne (7) hat und die zweite Führungseinrichtung eine Vielzahl zweiter führender Schrägverzahnungszähne (8) hat, die mit der Vielzahl der ersten führenden Schrägverzahnungszähne (7) zusammenpaßt.

2. Eine Vorrichtung nach Anspruch 1, bei der eine der beiden Führungseinrichtungen, d.h. der ersten und der zweiten Führungseinrichtung, als ein Außengewinde-Schraubelement ausgebildet ist, während das andere dieser beiden Führungseinrichtungen als ein Innengewinde-Schraubelement ausgebildet ist; und wobei wahlweise
I) eine Drehung und eine vertikale Bewegung des Auswerfers (6) durch einen Eingriff des Außengewinde-Schraubelements mit dem Innengewinde- Schraubelement das Werkstück (14) synchron dreht und bewegt, welches fest mit dem Auswerfer (6) durch die Verbindungseinrichtung verbunden ist, wobei das Werkstück (14) durch einen Eingriff der Vielzahl der Schrägverzahnungszähne, die auf der Seitenwand des Werkstücks ausgebildet sind, mit der Vielzahl der Schrägzahnformungselemente, die auf dem Hohlraum der Form (1) angeordnet sind, sich bewegt und dreht, in welchem Falle weiterhin wahlweise
II) sich der Auswerfer (6) um einen ersten Winkel gleichzeitig mit einer Bewegung entlang der Mittelachse um einen ersten Abstand dreht, während sich das Werkstück (14) um einen zweiten Winkel gleichzeitig mit einer Bewegung entlang der Mittelachse um einen zweiten Abstand dreht, wobei ein erstes Verhältnis des ersten Winkels zu dem ersten Abstand identisch ist mit einem zweiten Verhältnis des zweiten Winkels zu dem zweiten Abstand; und in welchem Falle entweder
III) der erste Winkel gleich dem zweiten Winkel sein kann oder
IV) die Vorrichtung weiterhin einen Auswurfstift (5), der entlang der Mittelachse bewegbar ist, um den Auswerfer (6) zwischen der ersten Position und der zweiten Position zu bewegen, und einen Stempel (9) umfaßt, um das Werkstück zu pressen, um die Vielzahl der Schrägverzahnungszähne auf der Seitenwand des Werkstücks (14) auszuformen, wobei in dem letzteren Falle wahlweise entweder
V) der Stempel (9) eine erste Ausnehmung mit einem kleineren Durchmesser und eine zweite Ausnehmung mit einem größeren Durchmesser, die koaxial zu der ersten Ausnehmung mit dem kleineren Durchmesser und angrenzend an diese angeordnet ist, hat, wobei die zweite Ausnehmung mit dem größeren Durchmesser eine Vielzahl von Geradzahn-Formungselementen zum Bilden einer Vielzahl von Geradzähnen, die koaxial mit der Vielzahl der Schrägverzahnungszähne auf der Seitenwand des Werkstücks sind, aufweist; oder
VI) wobei der Hohlraum (2) der Form (1) einen ersten Ringvorsprung (2a) zum Bilden einer ersten Ringnut auf einer Seite des Werkstücks aufweist und der Stempel (9) einen zweiten Ringvorsprung (9b) zum Ausbilden einer zweiten Ringnut auf der anderen Seite des Werkstücks (14) aufweist,

3. Ein Verfahren zum Gesenkschmieden oder -pressen eines schrägverzahnten Zahnrads und Entfernen dieses geschmiedeten oder formgepressten schrägverzahnten Zahnrads von einer Form (1), wobei das Verfahren die folgenden Schritte umfaßt:
A. Einsetzen eines Werkstücks in einen Hohlraum (2) von einer Form (1) und auf einen Auswerfer (6) über eine Verbindungseinrichtung zum festen Verbinden des Werkstücks (14) mit dem Auswerfer (6),
wobei der Hohlraum (2) eine vorgegebene Gestalt aufweist, die Form (1) eine Vielzahl von Schrägzahnformungselementen hat, die auf einem inneren Umfang dieses Hohlraums ausgebildet sind, zum Formen einer Vielzahl von Schrägverzahnungszähnen auf einer Seitenwand des Werkstücks (14), der Auswerfer (6) von einer Auswerferführung (4), die fest an der Form (1) befestigt oder einstückig mit dieser ausgebildet ist, getragen wird, damit er um eine Mittelachse des Auswerfers (6) drehbar ist und entlang der Mittelachse zwischen einer ersten Position, bei der der Auswerfer (6) unter dem Hohlraum (2) der Form (1) gelegen ist, und einer zweiten Position, bei der der Auswerfer (6) durch ein Mittelteil des Hohlraums (2) vorsteht, bewegbar ist,
wobei der Auswerfer (6) erste Führungsmittel hat und die Auswerferführung zweite Führungsmittel hat, die den ersten Führungsmitteln entsprechen und mit denen zum Eingriff kommen, wodurch der Auswerfer (6) beweglich und drehbar in die Auswerferführung (4) durch einen Eingriff der ersten Führungsmittel mit den zweiten Führungsmitteln eingepaßt ist,
B. Absenken und Herunterdrücken eines Stempels (9) auf das Werkstück (14), um die Vielzahl der Schrägverzahnungszähne auf der Seitenwand des Werkstücks auszuformen,
C. Anheben des Stempels (9) und Bewegen des Auswerfers (6) entlang der Mittelachse von der besagten ersten Position zu der besagten zweiten Position gleichzeitig mit einer Drehung desselben relativ zu der Auswerferführung (4) und
D. Entfernen des Werkstücks von dem Hohlraum (2) der Form (1), in der das Werkstück (14) über die Verbindungseinrichtungen fest mit dem Auswerfer (6) verbunden ist und aus der Form (1) bei einer Bewegung des Auswerfers (6) zu der zweiten Position herausbewegt wird, dadurch gekennzeichnet, daß
in dem Schritt A. die ersten Führungsmittel eine Vielzahl erster führender Schrägverzahnungszähne (7) haben und die zweiten Führungsmittel eine Vielzahl zweiter führender Schrägverzahnungszähne (8) haben, die mit der Vielzahl der ersten führenden Schrägverzahnungszähne (7) zusammenpassen.

4. Ein Verfahren nach Anspruch 3, bei dem in Schritt A. eine der beiden Führungseinrichtungen, d.h. der ersten Führungsmittel und der zweiten Führungsmittel, als ein Außengewinde-Schraubelement ausgebildet ist, während die andere dieser beiden Führungseinrichtungen als ein Innengewinde-Schraubelement ausgebildet ist.

5. Ein Verfahren nach Anspruch 4, bei dem in dem Schritt C. eine Drehbewegung und eine vertikale Bewegung des Auswerfers (6) durch einen Eingriff des Außengewinde-Schraubelements mit dem Innengewinde-Schraubelement das Werkstück (14), das fest mit dem Auswerfer (6) durch die Verbindungseinrichtung verbunden ist, synchron dreht und bewegt, wobei sich das Werkstück durch einen Eingriff der Vielzahl der Schrägverzahnungszähne, die auf der Seitenwand des Werkstücks ausgebildet sind, mit der Vielzahl der Schrägzahnformungselemente, die auf dem Hohlraum der Form (1) angeordnet sind, bewegt und dreht.

6. Ein Verfahren nach Anspruch 5, bei dem sich in dem Schritt C. der Auswerfer (6) um einen ersten Winkel gleichzeitig mit einem Bewegen entlang der Mittelachse um einen ersten Abstand dreht, während sich das Werkstück (14) um einen zweiten Winkel gleichzeitig mit einer Bewegung entlang der Mittelachse um einen zweiten Abstand dreht, wobei ein erstes Verhältnis des ersten Winkels zu dem ersten Abstand identisch zu einem zweiten Verhältnis des zweiten Winkels zu dem zweiten Abstand ist.

7. Ein Verfahren nach Anspruch 6, bei dem der erste Winkel gleich dem zweiten Winkel ist.

## Revendications

1. Dispositif permettant de forger une roue dentée à denture hélicoïdale et de retirer d'une matrice (1) la roue dentée à denture hélicoïdale forgée, le dispositif comprenant :
une matrice (1) comportant une cavité (2) de forme préfixée et de multiples éléments (3) de forgeage de dents hélicoïdales, formés sur une face circonférentielle intérieure de la cavité et servant à former de multiples dents hélicoïdales sur une paroi latérale d'une pièce (14),
un guide d'éjecteur (4) formé d'une seule pièce avec la matrice (1) ou fixé à demeure à cette matrice,
un éjecteur (6) porté par le guide d'éjecteur (4) de façon à pouvoir tourner autour d'un axe central de l'éjecteur (6) et à se déplacer le long de cet axe central entre une première position, dans laquelle l'éjecteur (6) est situé au-dessous de la cavité de la matrice (1), et une seconde position dans laquelle l'éjecteur (6) fait saillie au centre de la cavité (2), et
des moyens de liaison formés sur l'éjecteur (6) et servant à lier solidement la pièce à l'éjecteur (6) de manière à permettre un déplacement et une rotation d'un seul bloc de la pièce avec l'éjecteur (6),
dans lequel l'éjecteur (6) comporte des premiers moyens de guidage et le guide d'éjecteur (4) comporte des seconds moyens de guidage correspondant aux premiers moyens de guidage et coopérant avec ces moyens, de sorte que l'éjecteur (6) est emboîté d'une manière mobile et rotative dans le guide d'éjecteur (4) du fait d'une coopération des premiers moyens de guidage avec les seconds moyens de guidage, caractérisé en ce que
les premiers moyens de guidage comportent de multiples premières dents hélicoïdales de guidage (7) et les seconds moyens de guidage comportent de multiples secondes dents hélicoïdales de guidage (8) engrenant avec les multiples premières dents hélicoïdales de guidage (7).

2. Dispositif selon la revendication 1, dans lequel les uns des premiers moyens de guidage et des seconds moyens de guidage sont réalisés sous forme d'un élément fileté de type mâle, tandis que les autres des premiers moyens de guidage et des seconds moyens de guidage sont réalisés sous forme d'un élément fileté de type femelle, et, d'une manière facultative,
I) une rotation et un mouvement vertical de l'éjecteur (6) au moyen d'une coopération de l'élément fileté de type mâle avec l'élément fileté de type femelle font tourner et déplacent d'une manière synchronisée la pièce (14) liée solidement à l'éjecteur (6) par les moyens de liaison, la pièce (14) se déplaçant et tournant au moyen d'une coopération des multiples dents hélicoïdales formées sur la paroi latérale de la pièce avec les multiples éléments de forgeage de dents hélicoïdales disposés sur la cavité de la matrice (1), auquel cas, d'une manière en outre facultative,
II) l'éjecteur (6) tourne d'un premier angle en même temps qu'il se déplace d'une première distance le long de l'axe central, tandis que la pièce (14) tourne d'un second angle en même temps qu'elle se déplace d'une seconde distance le long de l'axe central, un premier rapport du premier angle à la première distance étant identique à un second rapport du second angle à la seconde distance, auquel cas
III) soit le premier angle peut être égal au second angle,
IV) soit le dispositif comprend en outre une tige d'éjection (5), mobile le long de l'axe central de façon à déplacer l'éjecteur (6) entre la première position et la seconde position, et un poinçon (9) servant à appliquer une pression sur la pièce de manière à former les multiples dents hélicoïdales sur la paroi latérale de la pièce (14), auquel dernier cas, d'une manière facultative,
V) soit le poinçon (9) comporte une première partie en retrait de plus petit diamètre et une seconde partie en retrait de plus grand diamètre disposée d'une manière coaxiale à la première partie en retrait de plus petit diamètre et adjacente à cette partie, la seconde partie en retrait de plus grand diamètre comportant de multiples éléments de forgeage de dents droites servant à former des dents droites d'une manière coaxiale aux multiples dents hélicoïdales situées sur la paroi latérale de la pièce,
VI) soit la cavité (2) de la matrice (1) comporte une première partie annulaire en saillie (2a) servant à former une première gorge annulaire sur une première face de la pièce et le poinçon (9) comporte une seconde partie annulaire en saillie (9b) servant à former une seconde gorge annulaire sur l'autre face de la pièce (14).

3. Procédé permettant de forger une roue dentée à denture hélicoïdale et à retirer d'une matrice (1) la roue dentée à denture hélicoïdale forgée, le procédé comprenant les opérations consistant
A. à placer une pièce dans une cavité (2) d'une matrice (1) et sur un éjecteur (6) par l'intermédiaire de moyens de liaison servant à lier solidement la pièce (14) à l'éjecteur (6),
la cavité (2) présentant une forme préfixée, la matrice (1) comportant de multiples éléments de forgeage de dents hélicoïdales, formés sur une circonférence intérieure de la cavité et servant à former de multiples dents hélicoïdales sur une paroi latérale de la pièce (14), l'éjecteur (6) étant porté par un guide d'éjecteur (4) fixé solidement à la matrice (1) ou formé d'un seul bloc avec cette matrice de façon à pouvoir tourner autour d'un axe central de l'éjecteur (6) et à se déplacer le long de cet axe central entre une première position, dans laquelle l'éjecteur (6) est situé au-dessous de la cavité (2) de la matrice (1), et une seconde position dans laquelle l'éjecteur (6) fait saillie au centre de la cavité (2),
selon lequel l'éjecteur (6) comporte des premiers moyens de guidage et le guide d'éjecteur comporte des seconds moyens de guidage correspondant aux premiers moyens de guidage et coopérant avec ces moyens, de sorte que l'éjecteur (6) est emboîté d'une manière mobile et rotative dans le guide d'éjecteur (4) du fait d'une coopération des premiers moyens de guidage avec les seconds moyens de guidage,
B. à faire descendre un poinçon (9) sur la pièce (14) et appliquer une pression vers le bas sur ce poinçon de manière à former les multiples dents hélicoïdales sur la paroi latérale de la pièce,
C. à relever le poinçon (9) et déplacer l'éjecteur (6) le long de l'axe central, de la première position à la seconde position, en même temps qu'une rotation de cet éjecteur vis-à-vis du guide d'éjecteur (4), et
D. à retirer la pièce de la cavité (2) de la matrice (1), la pièce (14) étant liée solidement à l'éjecteur (6) par l'intermédiaire des moyens de liaison et déplacée hors de la matrice (1) lors d'un déplacement de l'éjecteur (6) jusqu'à la seconde position, caractérisé en ce que :
dans l'opération A, les premiers moyens de guidage comportent de multiples premières dents hélicoïdales de guidage (7) et les seconds moyens de guidage comportent de multiples secondes dents hélicoïdales de guidage (8) engrenant avec les multiples premières dents hélicoïdales de guidage (7).

4. Procédé selon la revendication 3, selon lequel, dans l'opération A, les uns des premiers moyens de guidage et des seconds moyens de guidage sont réalisés sous forme d'un élément fileté de type mâle, tandis que les autres des premiers moyens de guidage et des seconds moyens de guidage sont réalisés sous forme d'un élément fileté de type femelle.

5. Procédé selon la revendication 4, selon lequel, dans l'opération C, une rotation et un mouvement vertical de l'éjecteur (6) au moyen d'une coopération de l'élément fileté de type mâle avec l'élément fileté de type femelle font tourner et déplacent d'une manière synchronisée la pièce (14) liée solidement à l'éjecteur (6) par les moyens de liaison, la pièce se déplaçant et tournant au moyen d'une coopération des multiples dents hélicoïdales formées sur la paroi latérale de la pièce avec les multiples éléments de forgeage de dents hélicoïdales disposés sur la cavité de la matrice (1).

6. Procédé selon la revendication 5, selon lequel, dans l'opération C, l'éjecteur (6) tourne d'un premier angle en même temps qu'il se déplace d'une première distance le long de l'axe central, tandis que la pièce (14) tourne d'un second angle en même temps qu'elle se déplace d'une seconde distance le long de l'axe central, un premier rapport du premier angle à la première distance étant identique à un second rapport du second angle à la seconde distance.

7. Procédé selon la revendication 6, selon lequel le premier angle est égal au second angle.
